# EUROPEAN PATENT APPLICATION

(11) **EP 1 458 211 A1**
(43) Date of publication of application: **15.09.2004**
(21) Application number: 04014148.3
(22) Date of filing: 22.12.2000
(51) Int. Cl.: H04Q 7/38, H04L 9/16

(54) **Radio communication device**

(30) Priority: 27.12.1999 JP 37065799
(62) Divisional of application: 00987706.9
(71) Applicant: MITSUBISHI DENKI KABUSHIKI KAISHA, Tokyo 100-8310 (JP)
(72) Inventor: Uga, Shinsuke, Chiyoda-ku, Tokyo 100-8310 (JP); Matsuyama, Hiroshi, Chiyoda-ku, Tokyo 100-8310 (JP); Chikazawa, Takeshi, Chiyoda-ku, Tokyo 100-8310 (JP)
(74) Representative: Popp, Eugen, Dr.

(57) **Abstract**

The present invention aims to provide a radio communication apparatus (100) wherein a terminal interface unit (10) is coupled with a radio communication control unit (20) which processes terminal interface unit (10) data which is at layer 2, or higher, and discriminates the data kind of the data at these layers. Further, a confidentiality/integrity processing unit (40) selectively performs a confidentiality processing to encrypt the data along, with integrity processing where an authentication code, subsequently used for detecting tampered data, is generated. Finally, a radio communication unit sends the data from either the radio communication control unit (20) or the confidentiality/integrity processing unit (40).

## Description

### Technical Field

This invention relates to a radio communication apparatus and a radio communication method for devices such as a cellular phone. In particular, the invention relates to a cellular phone which performs data confidentiality and integrity processing.

### Background Art

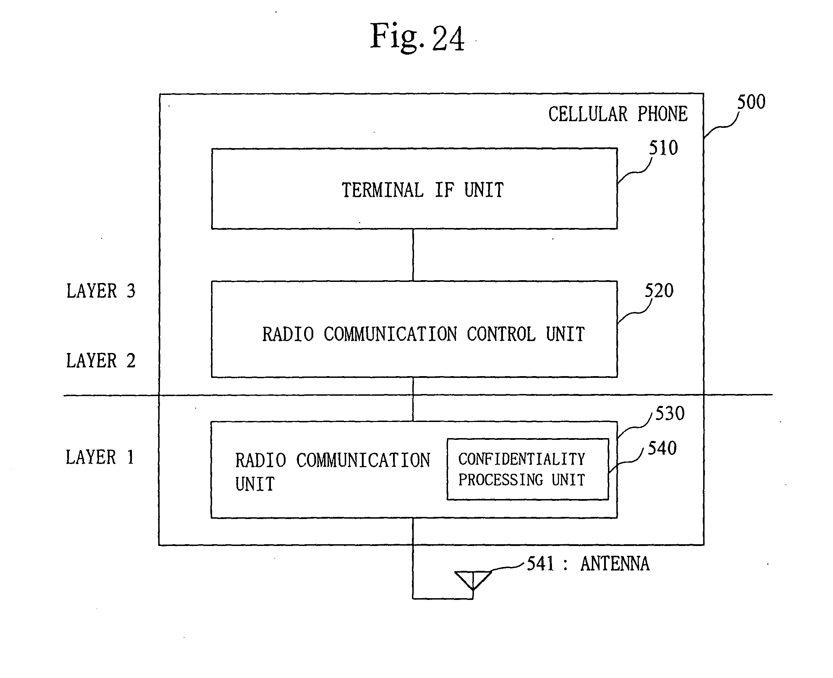

Fig. 24 shows a conventional cellular phone 500.

A terminal IF (interface) unit 510, a radio communication control unit 520 and a radio communication unit 530 are provided to the conventional cellular phone 500. The terminal IF unit 510 performs interface with a user of the cellular phone 500. The radio communication control unit 520 performs communication control of the whole cellular phone, data conversion and data processing based on protocol. The radio communication unit 530 modulates and demodulates data to enable radio communication. The radio communication unit 530 supports the physical layer (layer 1), which is the lowermost layer of seven layers defined by OSI (Open Systems Interconnection). A confidentiality processing unit 540 is provided to the radio communication unit 530. The confidentiality processing unit 540 encrypts or decrypts data of the physical layer to be processed by the radio communication unit 530. As the data sent/received by an antenna 541 is encrypted by providing the confidentiality processing unit 540, wiretappers are prevented from obtaining any significant information unless the ecryption codes are broken.

The conventional cellular phone 500 has the confidentiality processing unit 540 within the radio communication unit 530. Accordingly, the data to be processed by the confidentiality processing unit 540 is stored in the physical layer (layer 1). At the physical layer, it is impossible to discriminate data between user data and control data. Data sent/received by the cellular phone includes various kinds of data such as user data or signaling data, and it is required to perform data confidentiality processing based on the data kinds, or to ensure data integrity depending on the significance of the data. As shown in the conventional architecture, since the confidentiality processing unit 540 is provided to the layer 1, the data cannot be performed the confidentiality processing nor the integrity processing based on the data kind because it is impossible to discriminate the data kinds at the layer 1.

A preferred embodiment of the present invention aims to obtain a radio communication apparatus and a radio communication method performing confidentiality processing and the integrity processing of data based on the data kind.

Further, another objective of the preferred embodiment of the present invention is to obtain the radio communication apparatus and the radio communication method performing the data confidentiality processing and the data integrity processing at a higher layer equal to or greater than layer 2 (data link layer) of the seven layer of the OSI.

Further, another objective of the preferred embodiment of the present invention is to obtain the radio communication apparatus and the radio communication method selectively performing both of or either of the confidentiality processing of data and the integrity processing based on the data kind.

Further, another objective of the preferred embodiment of the present invention is to obtain the radio communication apparatus and the radio communication method performing data confidentiality/integrity processing for each channel in case the radio communication apparatus has multiple channels.

Further, another objective of the preferred embodiment of the present invention is to obtain the radio communication apparatus and the radio communication method which selectively performs either confidentiality or integrity processing on the data by discriminating between transparent and non-transparent data through a certain layer or a sub-layer.

### Disclosure of the Invention

A radio communication apparatus according to the invention includes:
a terminal interface unit for inputting data;
a radio communication control unit for inputting the data input by the terminal interface unit, for processing the data based on protocol, and outputting the data;
a confidentiality/integrity processing unit for inputting a control signal and data from the radio communication control unit, performing at least one of encryption of the data as confidentiality processing and generation of a message authentication code for detecting tampered data as integrity processing on the data input, and outputting the data processed to the radio communication control unit; and
a radio communication unit for inputting, modulating, and sending the data output from the radio communication control unit.

The confidentiality/integrity processing unit inputs the control signal from the radio communication control unit and selectively inputs the data from the terminal interface unit based on the control signal input, and
the confidentiality/integrity processing unit performs confidentiality processing on the data input and outputs the data which has been performed confidentiality processing to the radio communication unit.

The terminal interface unit outputs transparent data and non-transparent data, and
the radio communication control unit inputs the non-transparent data from the terminal interface unit, makes the confidentiality/integrity processing unit process the non-transparent data based on protocol, and
the radio communication control unit controls the transparent data to be transferred from the terminal interface unit to the confidentiality/integrity processing unit to perform the confidentiality processing.

The confidentiality/integrity processing unit is connected to the radio communication control unit via parallel interface.

The confidentiality/integrity processing unit is connected to the terminal interface unit with serial interface and connected to the radio communication unit with serial interface.

The confidentiality/integrity processing unit further includes:
a confidentiality processing unit including an encrypting unit for encrypting the data input; and
an integrity processing unit having a message authentication code appending unit for appending a message authentication code to the data input.

The confidentiality/integrity processing unit includes multiple encrypting units.

The confidentiality/integrity processing unit includes multiple message authentication code appending units.

The confidentiality processing unit and the integrity processing unit form one module which inputs the control signal and the data from the radio communication control unit, and the module performs at least one of the confidentiality processing and the integrity processing on the data input based on the control signal input.
. A radio communication apparatus according to the invention includes:
   a radio communication unit for receiving and demodulating data;
   a radio communication control unit for inputting data demodulated by the radio communication unit, processing the data based on protocol, and outputting the data processed;
   a confidentiality/integrity processing unit for inputting a control signal and the data from the radio communication control unit, based on the control signal input performing at least one of confidentiality processing of decrypting the data and integrity processing of detecting tampered data, and outputting the data processed to the radio communication control unit; and
   a terminal interface unit for inputting the data processed from the radio communication control unit and outputting the data.

The confidentiality/integrity processing unit inputs the control signal from the radio communication control unit and selectively inputs the data from the radio communication unit based on the control signal input, and
the confidentiality/integrity processing unit performs the confidentiality processing on the data input and outputs the data processed to the terminal interface unit.

The radio communication unit outputs transparent data and non-transparent data,
the radio communication control unit inputs the non-transparent data from the radio communication unit and makes the confidentiality/integrity processing unit process the non-transparent data based on protocol, and
the radio communication control unit controls the transparent data to be transferred from the radio communication unit to the confidentiality/integrity processing unit to perform the confidentiality processing.

The confidentiality/integrity processing unit is connected to the radio communication control unit with a parallel interface.

The confidentiality/integrity processing unit is connected to the terminal interface unit with a serial interface, and connected to the radio communication unit with a serial interface.

The confidentiality/integrity processing unit includes:
a confidentiality processing unit having a decrypting unit for decrypting the data input; and
an integrity processing unit having an integrity verification unit for verifying an integrity of the data input using a message authentication code appended to the data input.

The confidentiality processing unit includes multiple decrypting units.

The integrity processing unit includes multiple integrity verification units.

The confidentiality processing unit and the integrity processing unit form one module which inputs the control signal and the data from the radio communication control unit, and wherein the module, based on the control signal input, performs at least one of processes of the confidentiality processing unit and the integrity processing unit on the data input.

A radio communication apparatus for wireless data communication according to the invention includes:
a terminal interface unit for data input/output;
a radio communication control unit for processing the data based on protocol;
a radio communication unit for wireless data communication;
a confidentiality/integrity processing unit, provided among the terminal interface unit, the radio communication control unit, and the radio communication unit, which performs at least one of confidentiality processing for encrypting/decrypting data and integrity processing for detecting tampered data on the data input/output from/to the radio communication control unit, encrypts the data from the terminal interface unit to the radio communication unit, and decrypts the data from the radio communication unit to the terminal interface unit.

The confidentiality/integrity processing unit includes a confidentiality processing unit for performing a confidentiality processing on the data input, and an integrity processing unit for performing an integrity processing on the data input, separately.

The confidentiality processing unit separately includes an encrypting unit for encrypting the data from the terminal interface unit to the radio communication unit, and a decrypting unit for decrypting the data from the radio communication unit to the terminal interface unit.

The integrity processing unit separately includes a message authentication code appending unit for appending a message authentication code to the data input for performing an integrity verifying process, and an integrity verification unit for verifying an integrity of the data input using the message authentication code appended to the data input.

The communication apparatus is a portable mobile phone.

The confidentiality processing unit and the integrity processing unit employ same encryption algorithm.

The confidentiality processing unit and the integrity processing unit employ same encryption algorithm.

The confidentiality processing unit and the integrity processing unit employ same encryption algorithm.

The communication apparatus is a cellular phone.

The radio communication apparatus is a cellular phone.

The communication apparatus is a cellular phone.

The radio communication apparatus is a radio station for sending/receiving data to/from a mobile station.

The radio communication apparatus is a radio station for sending/receiving data to/from a mobile station.

The radio communication apparatus is a radio station for sending/receiving data to/from a mobile station.

The radio station is either of a base transceiver station and a radio network controller.

The radio station is either of a base transceiver station and a radio network controller.

The radio station is either of a base transceiver station and a radio network controller.

A radio communication method according to the invention includes:
a terminal interface step for inputting data;
a radio communication control step for inputting the data input by the terminal interface step and for processing the data based on protocol and outputting the data;
a confidentiality/integrity processing step for inputting a control signal and data from the radio communication step, performing at least one of encryption of the data as confidentiality processing and generation of a message authentication code for detecting tampered data as integrity processing on the data input, and outputting the data processed to the radio communication control step; and
a radio communication step for inputting, modulating, and sending the data output from the radio communication control step.

A radio communication method according to the invention includes:
a radio communication step for receiving and demodulating data;
a radio communication control step for inputting data demodulated by the radio communication step, processing the data based on protocol, and outputting the data processed;
a confidentiality/integrity processing step for inputting a control signal and the data from the radio communication control step, based on the control signal input performing at least one of confidentiality processing of decrypting the data and integrity processing of detecting tampered data, and outputting the data processed to the radio communication control step; and
a terminal interface step for inputting the data processed from the radio communication control step and outputting the data.

A radio communication method for wireless data communication according to the invention includes:
a terminal interface step for data input/output;
a radio communication control step for data processing based on protocol;
a radio communication step for wireless data communication; and
a confidentiality/integrity processing step, provided among the terminal interface step, the radio communication control step, and the radio communication step, and which performs at least one of confidentiality processing for encrypting/decrypting data and integrity processing for detecting tampered data on the data input/output from/to the radio communication control step, encrypts the data transferred from the terminal interface step to the radio communication step, and decrypts the data transferred from the radio communication step to the terminal interface step.

### Brief Explanation of the Drawings

Fig. 1 shows a configuration of a mobile communication system.
Fig. 2 shows a configuration of a radio network controller (RNC) 120.
Fig. 3 shows a configuration of a mobile station (MS) 100 according to the first embodiment.
Fig. 4 shows a configuration of a confidentiality/integrity processing unit 40 according to the first embodiment.
Fig. 5 shows a configuration of a confidentiality/integrity processing unit 40 according to the first embodiment.
Fig. 6 shows a configuration of a confidentiality/integrity processing unit 40 according to the first embodiment.
Fig. 7 shows a configuration of a confidentiality/integrity processing unit 40 according to the first embodiment.
Fig. 8 shows a configuration of a confidentiality/integrity processing unit 40 according to the first embodiment.
Fig. 9 shows a configuration of a mobile station (MS) 100 according to the second embodiment.
Fig. 10 shows a configuration of a confidentiality/integrity processing unit 40 according to the second embodiment.
Fig. 11 shows a configuration of a confidentiality/integrity processing unit 40 according to the second embodiment.
Fig. 12 shows an example of encrypting/decrypting systems.
Fig. 13 shows a configuration of a confidentiality/integrity processing unit 40 according to the second embodiment.
Fig. 14 is an illustration shown in ARIB STD-T63 33.102,3G Security; Security Architecture, Section 6.3.
Fig. 15 is an illustration shown in ARIB STD-T63 33.102,3G Secuity; Security Architecture, Figure 16b.
Fig. 16 is an illustration shown in ARIB STD-T63 33.102,3G Security; Security Architecture, Figure 16.
Fig. 17 shows a configuration of an encrypting module 51 (or a decrypting module 71) employed within a encrypting/decrypting 421.
Fig. 18 shows an installing form of the confidentiality/integrity processing unit 40.
Fig. 19 shows a case in which the confidentiality/integrity processing unit 40 is implemented by software.
Fig. 20 shows a mechanism for calling cipher program 47 by an application program executed in a radio communication control unit 20.
Fig. 21 shows a concrete example of data 92, 93 in case of RLC non-transparent mode.
Fig. 22 shows a concrete example of voice data as one example of transparent data 95, 96.
Fig. 23 shows a concrete example of unrestricted digital data as one example of transparent data 95, 96.
Fig. 24 shows a conventional cellular phone 500.

### Preferred Embodiment of Carrying Out the Invention

### Embodiment 1.

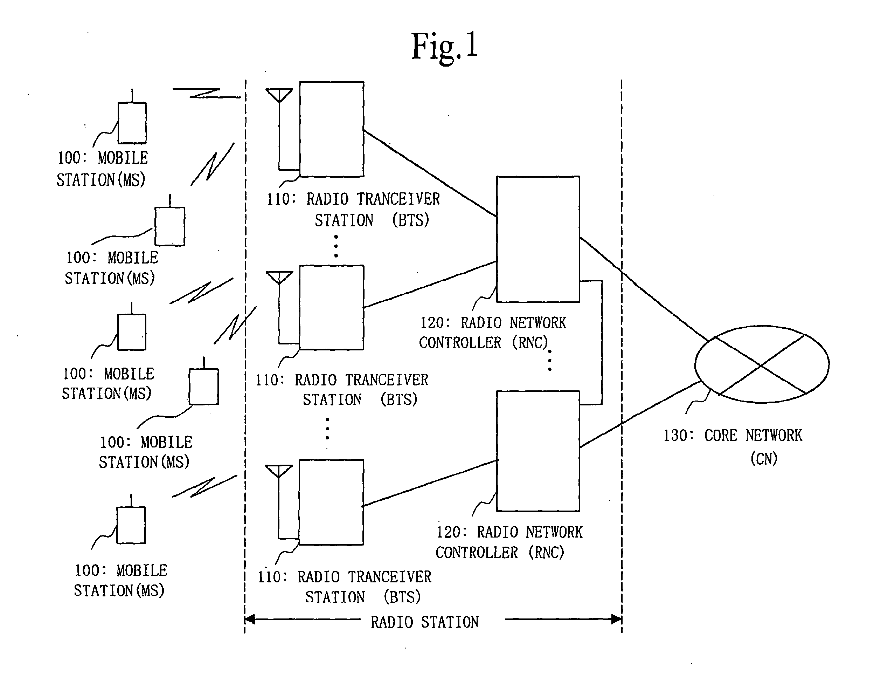

Fig. 1 shows a general configuration of a mobile communication system according to this embodiment.

A mobile station (MS) is one example of the radio communication apparatus according to the invention. The mobile station (MS) 100 is, for example, a cellular phone. The mobile station (MS) 100 is connected to a base transceiver station (BTS) 110 by radio. The base transceiver station (BTS) 110 is connected to a radio network controller (RNC) 120. The radio network controller (RNC) 120 is connected to another radio network controller (RNC) 120. The radio network controller (RNC) 120 is also connected to a core network (CN) 130, and further connected to another radio network controller (RNC) 120 via the core network (CN) 130. One or both of the base transceiver station (BTS) 110 and the radio network controller (RNC) 120 can be referred to as a radio station.

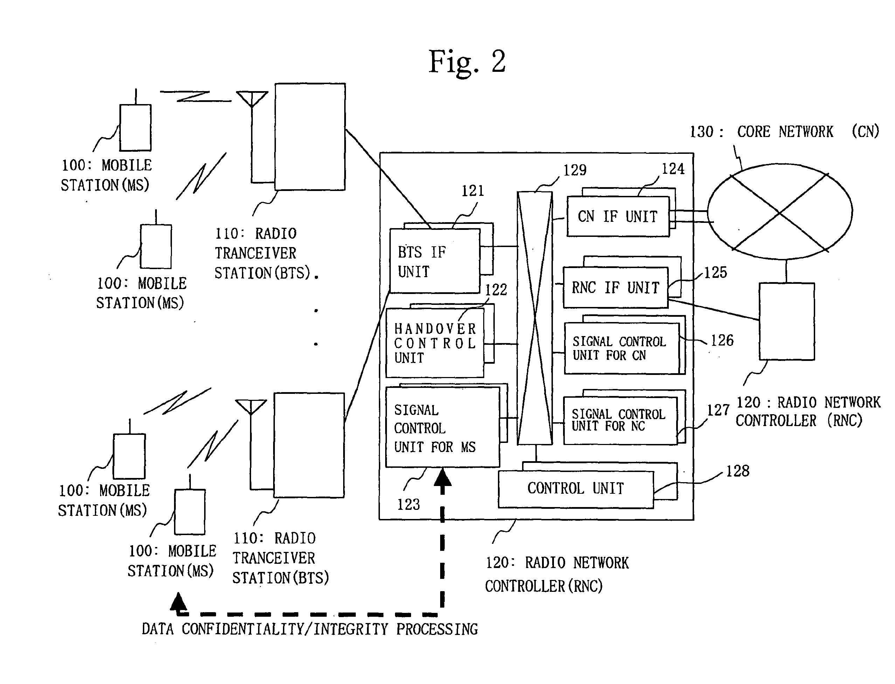

Fig. 2 shows a configuration of the same mobile communication system as shown in Fig. 1. In particular, the figure shows the internal configuration of the radio network controller (RNC) 120.

A BTS IF unit 121 connects the base transceiver station (BTS) 110. A handover control unit 122 controls handover in case the mobile station (MS) 100 moves between the base transceiver stations (BTS) 110.

A signal control unit 123 for MS performs radio communication control and data confidentiality/integrity processing while communicating with the mobile station (MS) 100. The following confidentiality/integrity processing of the mobile station (MS) 100 is performed corresponding to the confidentiality/integrity processing of the signal control unit 123 for MS. Namely, data encrypted by the mobile station (MS) 100 is decrypted by the signal control unit 123 for MS. In reverse, the data encrypted in the signal control unit 123 for MS is decrypted in the mobile station (MS) 100. An authentication code appended by the mobile station (MS) 100 to ensure the integrity of data is checked by the signal control unit 123 for MS. In reverse, the authentication code appended by the signal control unit 123 for MS to ensure the integrity of data is checked by the mobile station (MS) 100. The data confidentiality processing or the data integrity processing is performed at the second layer of the seven layers, that is, layer 2 (data link layer). A CN IF unit 124 interfaces with the core network (CN) 130.

A RNC IF unit 125 interfaces with another radio network controller (RNC) 120. A signal control unit 126 for CN performs control with a core network (CN) 130. A signal control unit 127 for RNC performs control with another radio network controller (RNC) 120. A control unit 128 controls the whole radio network controller (RNC) 120. A switch 129 switches control signals and packet data based on the control performance of the control unit 128 among the radio station (BTS) 110, the radio network controller (RNC) 120 and the core network (CN) 130. Namely, the switch 129 switches not only the packet data, but all data kinds such as speech data, and further the switch 129 also switches the control signals.

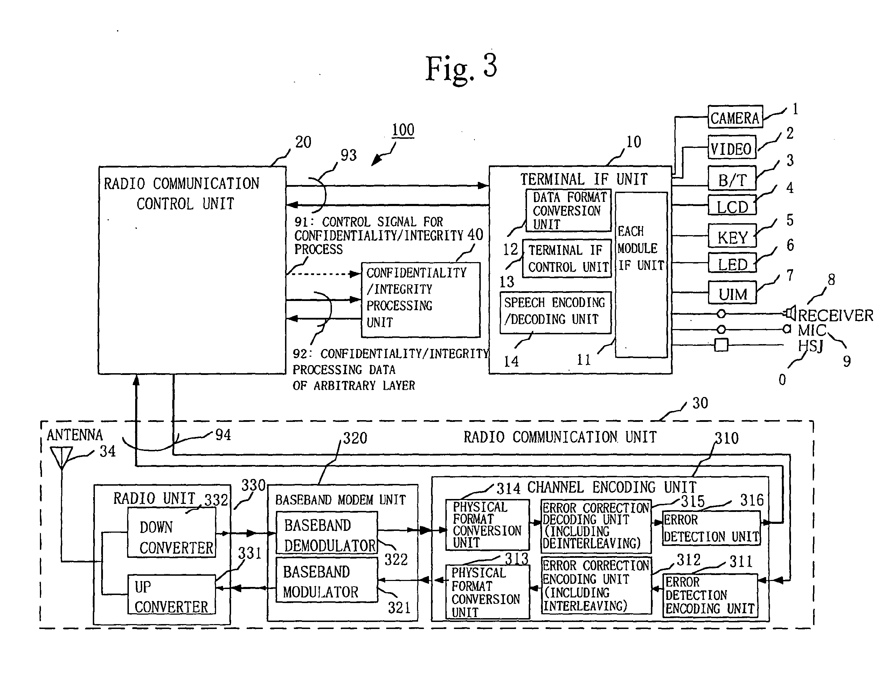

Fig. 3 shows a configuration of the mobile station (MS) 100.

The mobile station (MS) 100 includes a terminal IF unit 10, a radio communication control unit 20, a radio communication unit 30 and a confidentiality/integrity processing unit 40. A camera 1, a video 2, B/T (Blue Tooth) 3, an LCD 4, a KEY 5, an LED 6, a USIM (Universal Subscriber Identity Module) 7, a RECEIVER 8, a MIC 9, and an HSJ (Head Set Jack) 0 are connected to the terminal IF unit 10. These devices of the camera 1 through the HSJ 0 perform interface processing with a user (a person) or a device to be connected, and the devices input or output information which can be recognized by the user (person) or the device to be connected.

The terminal IF unit 10 includes a module IF unit 11 for each module, a data format converter 12, a terminal IF control unit 13, and a speech encoding/decoding unit 14. The module IF unit 11 for each module interfaces with each of the devices of the camera 1 through the HSJ 0. The data format converter 12 converts the data formats processed by the devices of the camera 1 through the HSJ 0 to/from the data formats processed inside the mobile station (MS) 100. The terminal IF control unit 13 controls the operation of the terminal IF unit 10. The speech encoding/decoding unit 14 encodes speech electric signals input by the MIC 9 into speech code. Further, the speech encoding/decoding unit 14 decodes the encoded signals to output the speech electric signals to the RECEIVER 8.

The radio communication control unit 20 controls the whole mobile station (MS) 100. The radio communication control unit 20 is provided with a hardware circuit including a CPU, a ROM, a RAM, a firmware, and the like, or software module. The radio communication control unit 20 processes data between the terminal IF unit 10 and the radio communication unit 30. The radio communication control unit 20 converts data based on rules defined by the standard or the protocol. In particular, the radio communication control unit 20 processes data of layer 2 or upper levels of layer, by such functions as packeting or concatenating the data. The radio communication control unit 20 can discriminate the data kind, because the radio communication control unit 20 processes the data of layer 2 or upper. Accordingly, the radio communication control unit 20 can judge if certain data should undergo the confidentiality processing or the integrity processing based on the data kind. It is impossible to discriminate the data kind at the layer 1, and therefore it is impossible to judge whether the data should be performed the confidentiality processing or the integrity processing.

The radio communication unit 30 is provided with a channel encoding unit 310, a baseband modulating/demodulating unit 320, a radio unit 330, and an antenna 34. The channel encoding unit 310 includes encoding units and decoding units for respective channels. The encoding unit includes an error detection encoding unit 311, an error correction encoding unit 312, and a physical format converter 313. Further, the decoding unit includes a physical format converter 314, an error correction decoding unit 315, and an error detection unit 316. The baseband modulating/demodulating (MODEM) unit 320 modulates and demodulates the band. The baseband modulating/demodulating unit 320 includes a baseband modulator 321 and a baseband demodulator 322. The radio unit 330 converts the baseband signals into transmission spectrum, or reverse the conversion. The radio unit 330 includes an up-converter 331 and a down-converter 332.

The confidentiality/integrity processing unit 40 is connected to the radio communication unit 20. The confidentiality/integrity processing unit 40 receives data from the radio communication control unit 20 and performs the data confidentiality processing. Further, the confidentiality/integrity processing unit 40 ensures the integrity of the data. The confidentiality/integrity processing unit 40 inputs a control signal 91 from the radio communication control unit 20 for the data confidentiality/integrity processing. Further, the confidentiality/integrity processing unit 40 inputs data 92 of an arbitrary layer of 2 or upper levels of layer as the processing data of the confidentiality processing and/or data 92 of an arbitrary layer of 2 or upper levels of layer as the processing data of the integrity processing from the radio communication control unit 20. The confidentiality/integrity processing unit 40 performs the confidentiality processing and/or the integrity processing of the data 92 based on the input control signal 91 to output to the radio communication control unit 20. The control signal 91 includes parameters such as a key, an initial value, selection between the confidentiality processing and the integrity processing.

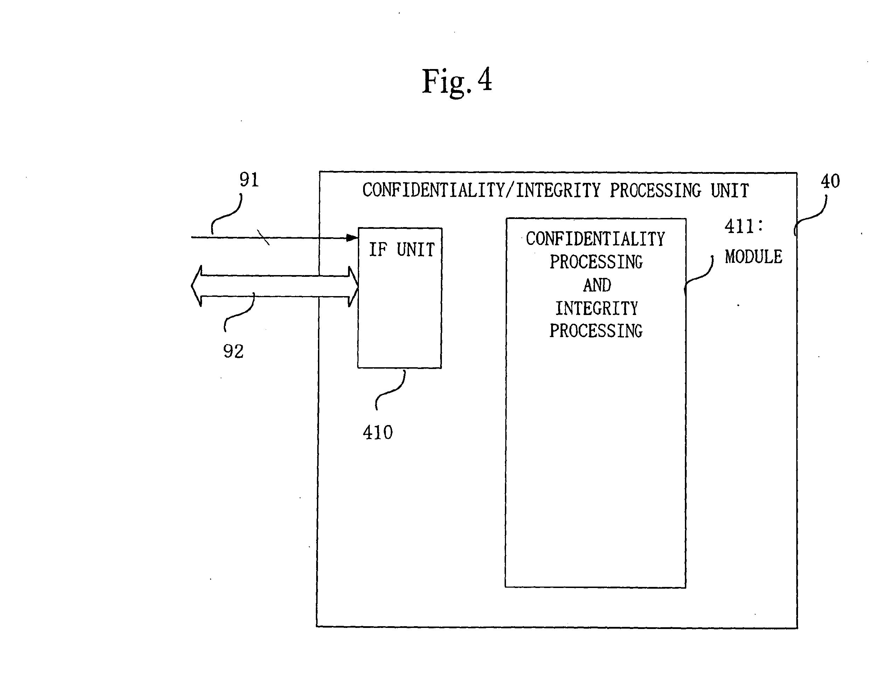

Fig. 4 shows a configuration of the confidentiality/integrity processing unit 40.

The confidentiality/integrity processing unit 40 includes an IF unit 410 and a module 411. The module 411 performs the confidentiality processing and the integrity processing within the same circuit or using the same algorithm. The selection between the confidentiality processing and the integrity processing is determined by the control signal 91.

Here, the confidentiality processing means encrypting or decrypting the data. Further, the integrity processing means detecting data tampering by appending authentication codes to the data or reproducing and comparing the authentication codes.

The confidentiality processing and the integrity processing can be performed by the same circuit or algorithm, or by a similar circuit or a similar module. Accordingly, as shown in Fig. 4, the confidentiality processing and the integrity processing can be performed by a single module 411. In case of Fig. 4, it is possible to reduce the hardware resource and the software resource. Hereinafter, a "module" refers to the ones implemented either by hardware or software only, or by combining the both tools.

Here, concrete examples of the confidentiality processing and the integrity processing used for the cellular phone will be explained.

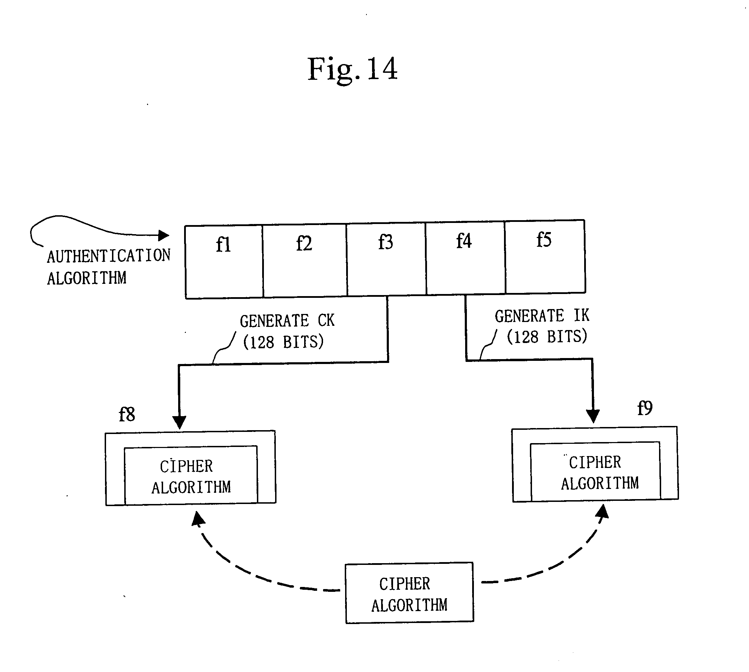

Fig. 14 is a figure shown in ARIB STD-T63 33.102,3G Security; Security Architecture, Section 6.3.

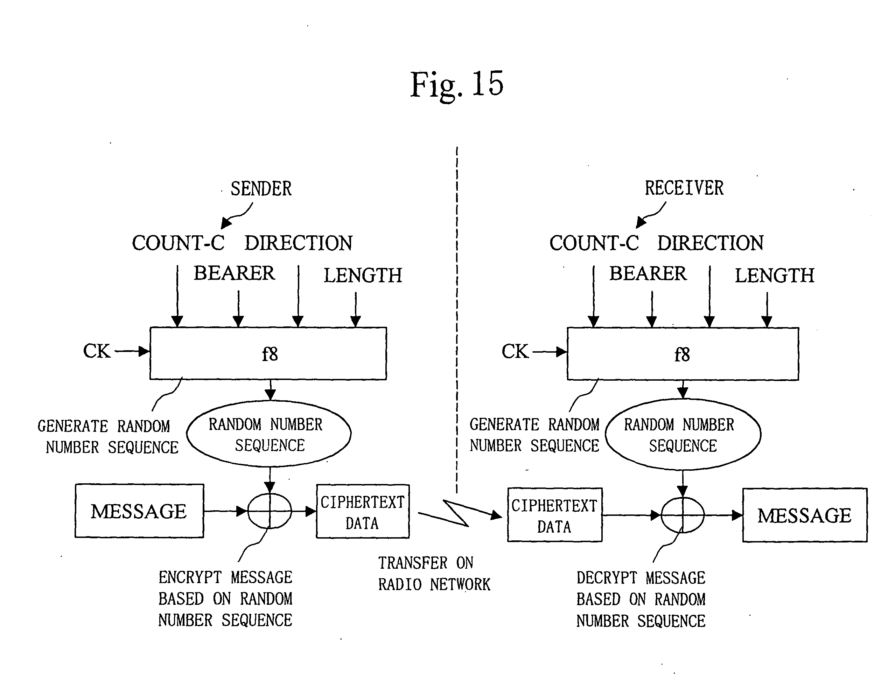

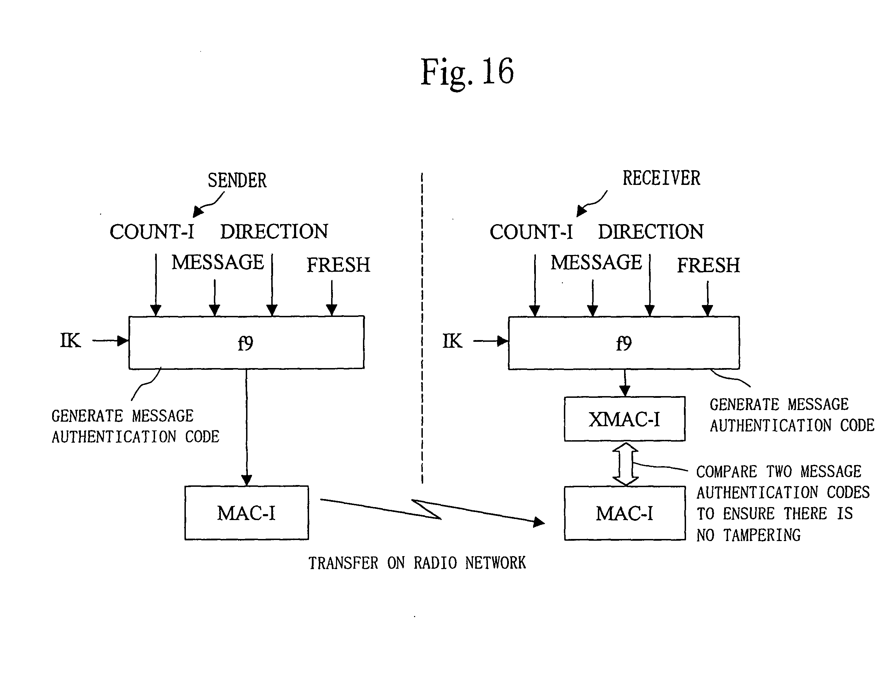

Fig. 15 is a figure shown in ARIB STD-T63 33.102,3G Security; Security Architecture, Figure 16b.

Fig. 16 is a figure shown in ARIB STD-T63 33.102,3G Security; Security Architecture, Figure 16.

Fig. 14 shows an encrypting method on the radio line. Signs shown in Fig. 14 mean the following:
CK: cipher key (encryption key)
F8: function for data confidentiality processing
IK: integrity key (message authentication key)
F9: function for data integrity processing

Cellular phone carriers implement authentication using functions f1 through f5. The 128-bit encryption keys called CK and IK generated through this authentication process are transferred to the function for data confidentiality processing (f8) and the function for data integrity processing (f9).

Fig. 15 shows an encrypting method on the radio line. The signs shown in Fig. 15 mean the following:
f8: function for data confidentiality processing
CK: cipher key (encryption key)
MESSAGE: plaintext data which a sender wants to send to a receiver such as user data and signal information before encryption
COUNT-C: numeral value data showing the accumulated number of transmission/reception, incremented by 1 at each session.
BEARER: bit for identifying logical channel
DIRECTION: bit for discriminating the direction of transmission of ciphertext
LENGTH: bit length of MESSAGE or ciphertext data

As shown in Fig. 15, encryption/decryption of the data is performed based on a random number sequence generated by the function f8 for data confidentiality processing.

Fig. 16 shows a method for generating message authentication code. Signs shown in Fig. 16 mean the following:
f9: function for data integrity processing
IK: integrity key (message authenticating key)
COUNT-I: numeral value data showing the accumulated number of transmission/reception, incremented by 1 at each session
MESSAGE: plaintext data which a sender wants to send to a receiver such as user data and signal information before encryption
DIRECTION: bit for discriminating the direction of transmission
FRESH: random number generated for each user
MAC-I: message authentication code for integrity (message authentication code computed by the sender)
XMAC-I: expected message authentication code for integrity (message authentication code computed by the receiver)

As shown in Fig. 16, the integrity of the data can be checked by comparing two message authentication codes at the receiver side.

In the following, the operation will be explained.

To perform ciphered communication between the terminal and the network within the radio network, authentication process is required, in which one partner confirms the other is a proper partner, or both partners mutually confirm the other is proper before sending/receiving data between the two partners.

As shown in Fig. 14, during a series of authentication processes, both the terminal and the network use five functions named functions f1 through f5. In parallel with the authentication process, the function generates a cipher key (CK) of 128 bits and a message authentication key (integrity key, IK) at both the terminal and the network.

The two keys can be shared exclusively by the terminal and the network which have been mutually authenticated, and the two keys are used within the two functions f8 and f9 described below. The two keys vary for each communication session, and further, there are no patterns among keys generated. Then, the keys are discarded when the communication is over.

The mechanism (protocol) required for this authentication process is standardized. However, as the functions of f1 to f5 are not standardized, operators decide these functions independently.

The data security after authentication processing is maintained by the data confidentiality and integrity processing techniques.

The first, data confidentiality technique is applied to encrypt the user data and the signal information including speech transferred on the radio network, and for preventing wiretapping. To implement this data confidentiality processing, a function called data confidentiality function (hereinafter, referred to as f8) is employed.

In the case of communicating data which has undergone confidentiality processing as shown in Fig. 15, the sender uses the encryption key (CK) generated at authentication process. Further, a random number sequence is generated by inputting a bit length (LENGTH) of the target data for encryption/decryption, an up/down link (DIRECTION), a counter (COUNT-C), a logic channel identifier (BEARER) to f8.

Here, the up/down link means those distinguishing bits which indicates the transmission direction of ciphertext data between a terminal and a base station. Further, the counter is data showing the number of accumulated times of sending/receiving data. At each sending/receiving the data, a fixed value is added to the counter. The counter is used for preventing an attack which tries to send the ciphertext data that has been sent previously. Yet further, the logic channel identifier means a bit for identifying a logical channel performing encryption.

Ciphertext data is generated by XORing the random number sequence generated above and the data/signal information to be encrypted and sent to the receiver.

The parameters except CK are sent from the sender to the receiver without encryption. It is unnecessary to send CK because the same parameter is generated at the receiver side at authentication process.

Even if the parameters other than CK are obtained by the third party, the security of the original message can be kept, as the random number sequence required to decrypt the ciphertext data cannot be generated as long as CK remains secret.

At the receiver side, the random number sequence is generated using the received parameters and CK which has been already obtained, the random number sequence is XORed with the ciphertext data received to decrypt into the original message.

This method is a variation of OFB (output feedback) mode, which is one of the modes utilizing the block cipher defined by ISO/IEC10116. In OFB mode, even if noise generated on the transmission paths is mixed in the ciphertext data, the decode processing can prevent the noise part from increasing. For this reason, this mode is often adopted for radio voice communication.

The second technique for keeping the security of data is data integrity technique, which detects tampering in the signal information by appending a message authentication code (message authentication code) to the signal information on the radio communication line. This is also called message authentication technique. To implement this data integrity technique, a function for data integrity (hereinafter, referred to as f9) is used. The same encryption algorithm as F8 is employed in the core part of f9.

First, on authentication, the message authentication key (IK) is derived from the function f4 for generating the message authentication key, and the message authentication key is transferred to f9. As shown in Fig. 16, a message authentication code (MAC-I or XMAC-I) is generated by inputting the data (MESSAGE), the up/down link (DIRECTION), the counter (COUNT-C), the random number (FRESH) generated for each user as well as the message authentication key.

These parameters are also sent to the receiver by using an area of data format which is not encrypted by the sender. Even if the parameters are obtained by the third party, the confidentiality of the data can be kept as long as the message authentication key (IK) is kept secret, which is the same as the case of data confidentiality.

The sender sends the data with appending this message authentication code (MAC-I) appended to the receiver. The receiver, similarly, computes the message authentication code (XMAC-I) by using f9. It can be confirmed there is no tampering by comparing MAC-I and XMAC-I to find them identical.

Here, the following shows some examples of subsequent process in case of tamper detection:
(1) Request the retransmission of the data and check if the received message authentication code is proper or not.
(2) Disconnect the connection in case of consecutive tamper detection.

According to 3GPP specification (for more information, access http://www.3gpp.org/About_3GPP/3gpp.htm), the encryption/decryption module has the function to encrypt the input plaintext data (data to be encrypted) into the ciphertext data (encrypted data) and output the ciphertext data, and the function to decrypt the ciphertext data into the plaintext data and output the plaintext data. Assuming the embodiment is compliant to the 3GPP specification, the above COUNT/BERARER/DIRECTION/CK/LENGTH correspond to the control signal 91 shown in Fig. 3 as concrete examples.

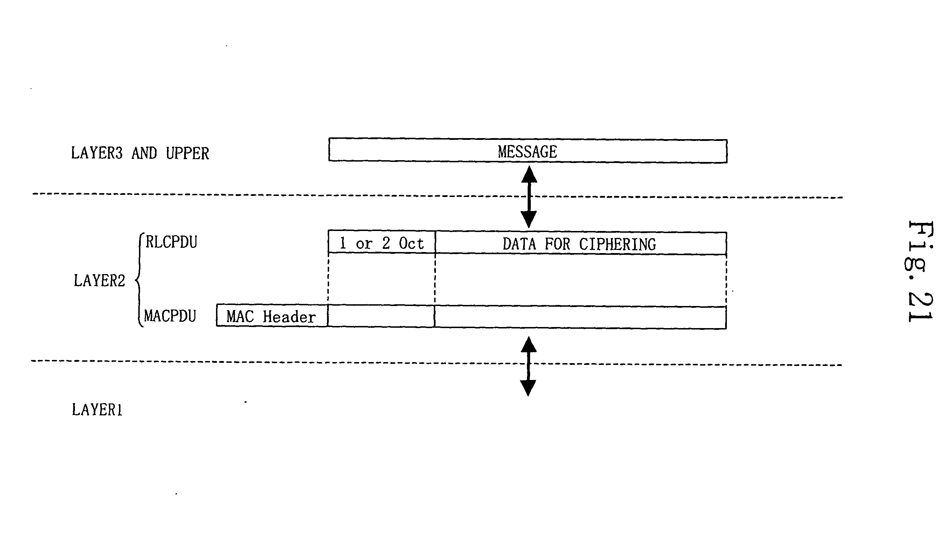

Further, as for concrete examples of the data 92 and 93 shown in Fig. 3, for example, "MACSDU" or "RLCPDU (datapart)" corresponds as shown in Fig. 21. Here, "RLCSDU (datapart)" is a part of RLCPDU, from which the upper 1 Oct or 2 Octs (1 byte or 2 bytes) is deleted (the part of "DATA FOR CIPHERING" shown in Fig. 21). "MACSDU" or "RLCPDU (datapart)" is an example of MESSAGE shown in Fig. 15. Yet further, MACSDU denotes Media Access Control Service Data Unit. RLCPDU denotes Radio Link Control Protocol Data Unit. Each message within the message flow is structured from RLCPDU at the layer 3 after deleting RLC header.

Although RLCPDU has 1-Oct or 2-Oct part which is not subjected to confidentiality processing, all of the RLCPDU is input to the confidentiality/integrity processing unit 40 and the unit opt not to perform confidentiality/integrity processing on the 1-Oct or 2-Oct part. This is in order to reduce the load of the radio communication control unit 20 wherein the load is generated by shifting 1 Oct or 2 Oct for removing the excluded part of 1 Oct or 2 Oct from the all data unit (RLCPDU).

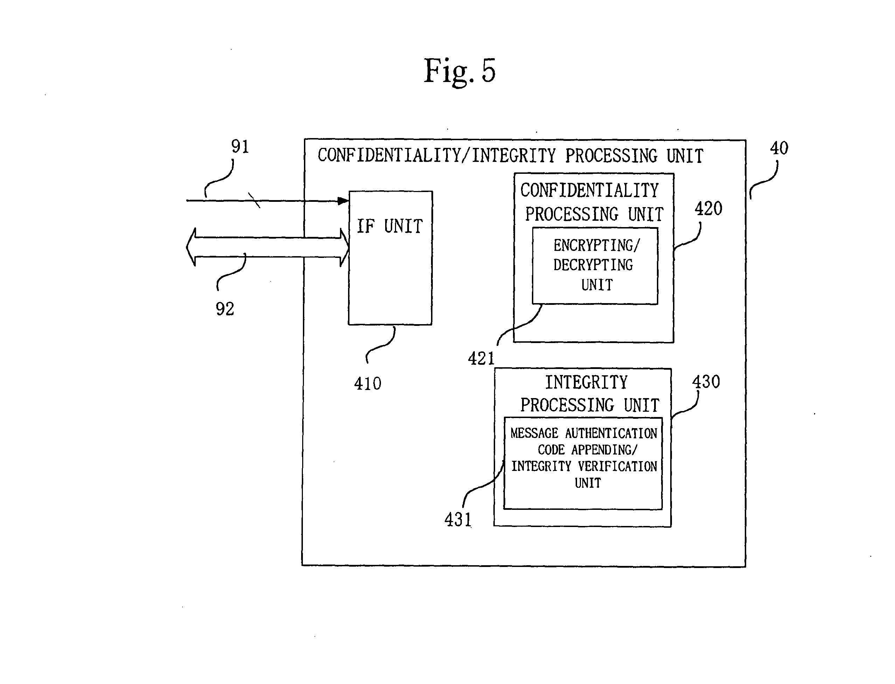

Fig. 5 shows another example of the confidentiality/integrity processing unit 40.

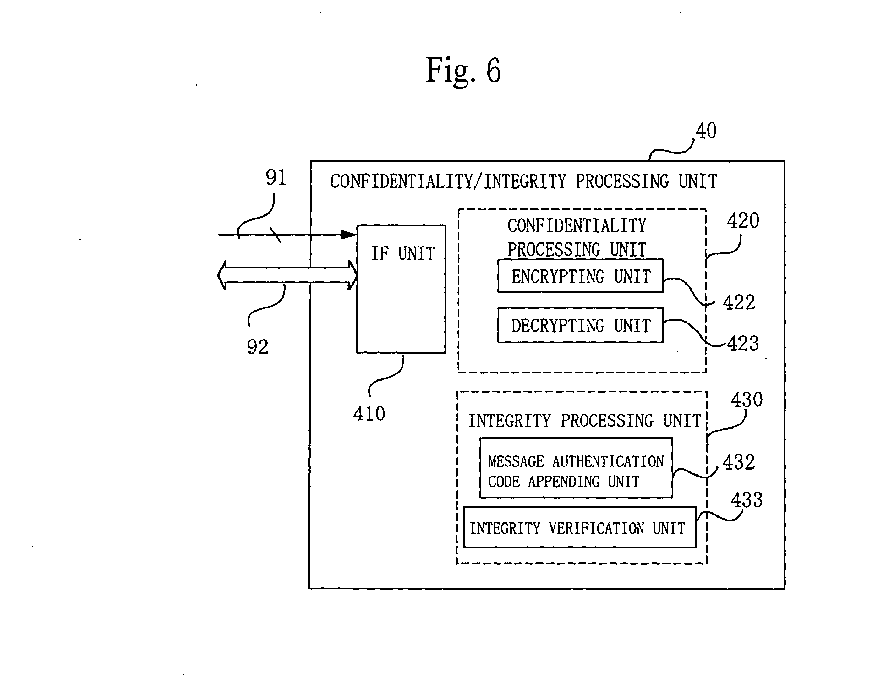

As featured in Fig. 5, a confidentiality processing unit 420 and an integrity processing unit 430 are provided separately. Inside the confidentiality processing unit 420, an encrypting/decrypting unit 421 is provided. Inside the integrity processing unit 430, a message authentication code appending/integrity verification unit 431 is provided. The enrypting/decrypting unit 421 shows a case in which the encryption and the decryption are performed using an identical module. The message authentication code appending/integrity verification unit 431 shows a case in which appending the message authentication code and verifying the integrity are performed using an identical module. A case shown in Fig. 5 is a configuration in which the encryption and the decryption are performed by the same function or appending the message authentication code and verifying the integrity are performed by the same function. Compared with Fig. 6, it is possible to reduce the hardware resource and the software resource within the case of Fig. 5.

Fig. 6 shows another example of the confidentiality/integrity processing unit 40.

As featured in Fig. 6, inside the confidentiality processing unit 420, an encrypting unit 422 and a decrypting unit 423 are provided separately. Further, inside the integrity processing unit 430, a message authentication code appending unit 432 and an integrity verification unit 433 are provided separately. A case shown in Fig. 6 is a configuration in which the encryption and the decryption are performed by different functions or appending the message authentication code and verifying the integrity are performed by different functions. It is possible to respectively perform encrypting, decrypting, appending the message authentication code, verifying the integrity, and further the data confidentiality processing or the integrity processing can be simultaneously performed in parallel on sent/received data. Accordingly, the high speed processing can be done.

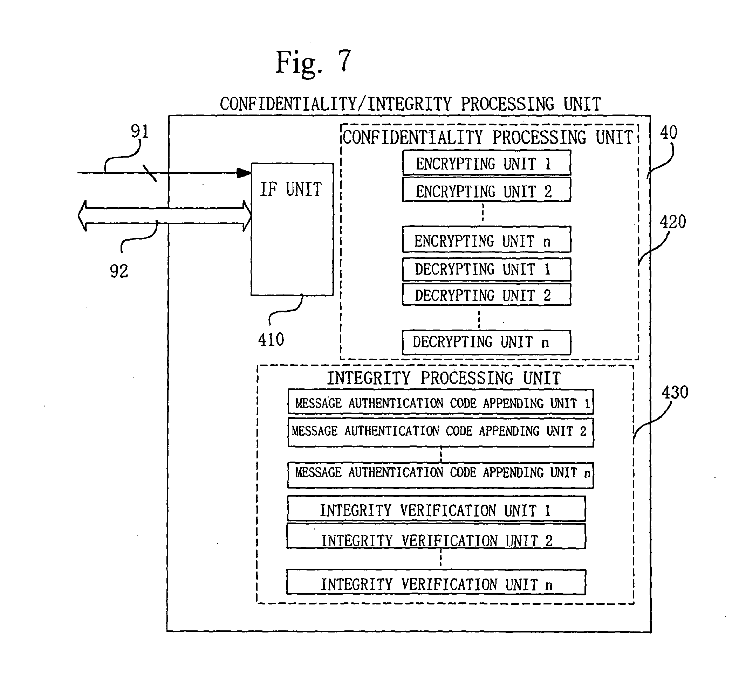

Fig. 7 shows a case in which multiple encrypting units 422 and multiple decrypting units 423 are provided in the confidentiality processing unit 420. Further, as shown in the figure, multiple message authentication code appending units 432 and multiple integrity verification units 433 are provided in the integrity processing unit 430. While the mobile station (MS) 100 is operating, there may be a case in which data in multiple channels should be processed at the same time. For example, when two kinds of data such as speech data and facsimile data are simultaneously transferred, data of at least two channels should be simultaneously processed. In such a case, the speech data can be encrypted by the encrypting unit 1, and the facsimile data can be encrypted by the encrypting unit 2. Further, in case of decryption, data on multiple channels can be decrypted simultaneously. It is not necessary to have the same number (n in case of Fig. 7) of the encrypting units 422, the decrypting units 423, the message authentication code appending units 432, and the integrity verification units 433. The number of each units can be determined according to the number of channels to be processed simultaneously by the mobile station (MS) 100. In another way, the above units do not correspond to each channel, but when a certain channel needs to process a large amount of data at a high speed, it is possible to make two encrypting units process the large amount of data assigned to the channel. Namely, the number of each unit such as the encrypting unit 422, the decrypting unit 423, the message authentication code appending unit 432, and the integrity verification unit 433 can be determined according to the number of channels to be processed simultaneously and/or amount of data.

Further, the maximum number of the encrypting units 422 and the maximum number of the decrypting units 423 can be different.

Further, the maximum number of the message authentication code appending units 432 and the maximum number of the integrity verification units 433 can be different.

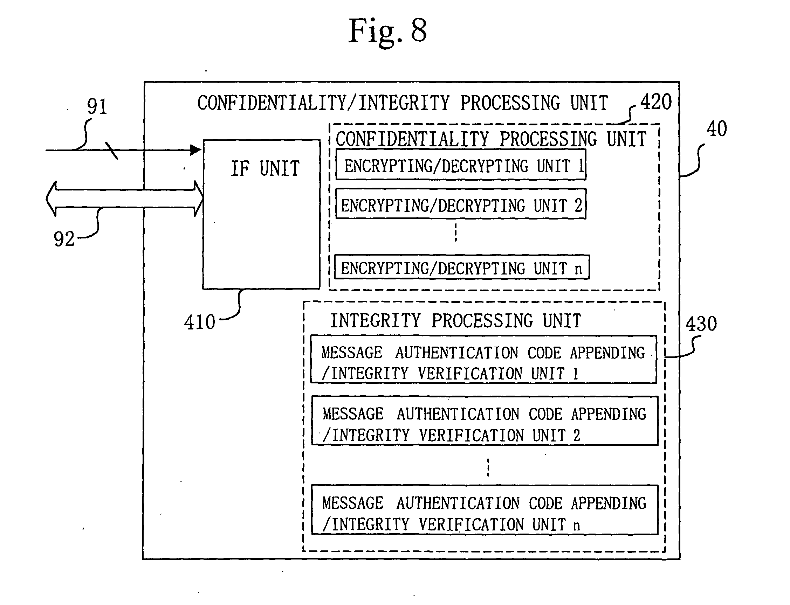

Fig. 8 shows the case in which the confidentiality processing unit 420 is provided with multiple encrypting/decrypting units 421. Further, as shown in the figure, the integrity processing unit 430 is provided with multiple message authentication code appending/integrity verification units 431.

In Fig. 8, the encrypting/decrypting unit 421 and the message authentication code appending/integrity verification unit 431 shown in Fig. 5 are respectively made multiple. In case of Fig. 8, when the encryption and the decryption are performed using the same function, multiple encrypting/decrypting units 421 are provided corresponding to multiple channels. Similarly, when the message authentication code appending and the integrity verification are performed using the same function, multiple message authentication code appending/integrity verification units 431 are provided corresponding to multiple channels. Compared with the case shown in Fig. 7, the configuration of Fig. 8 can reduce the hardware resource and the software resource.

In cases shown in Figs. 4 through 8, the confidentiality/integrity processing unit 40 includes both the confidentiality processing unit 420 and the integrity processing unit 430. However, the confidentiality/integrity processing unit 40 can include either of the confidentiality processing unit 420 and the integrity processing unit 430. When the confidentiality/integrity processing unit 40 includes either of the confidentiality processing unit 420 and the integrity processing unit 430, the process of the other can be performed by the radio communication control unit 20.

### Embodiment 2.

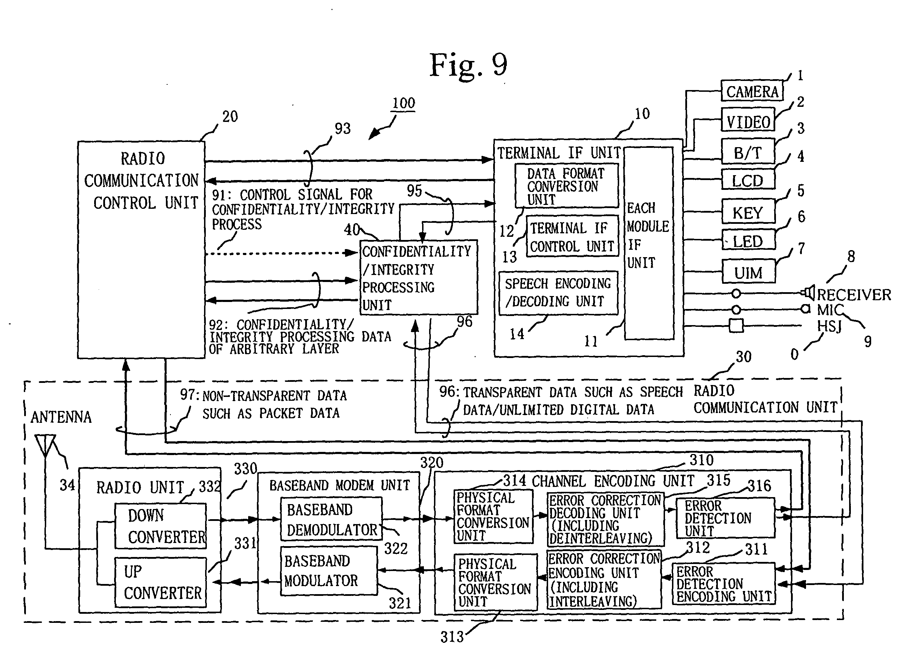

Fig. 9 shows another configuration of the mobile station (MS) 100.

Different from the configuration of Fig. 3, in Fig. 9, data is input/output between the terminal IF unit 10 and the confidentiality/integrity processing unit 40. And further, data is also input/output between the radio communication unit 30 and the confidentiality/integrity processing unit 40. In Fig. 9, non-transparent data 97 is non-transparent data such as packet data. Further, transparent data 95, 96 are transparent data such as speech data, unrestricted digital data. Transparent data means the data is not changed throughout input to output in any layers or sub-layers of the OSI reference layers. Whereas, the non-transparent data means the data requires some data processing such as data format conversion through input to output in some layers or sub-layers of the OSI reference layers. For example, at an RLC (Radio Link Control) sub-layer of the layer 2, when SDU (Service Data Unit) and PDU (Protocol Data Unit) of data are different, the data is non-transparent data. When SDU and PDU of data at MAC (Media Access Control) sub-layer of the layer 2 are same, the data is transparent data. In case shown in Fig. 9, the transparent data is, for example, speech data which can be transferred to the terminal IF unit 10 without any processing on the data of the layer 1 input/output by the radio communication unit 30. On the other hand, the non-transparent data is, for example, packet data which requires some processing on the data of layer 1 output from the radio communication unit 30.

As mentioned above, the concrete examples of transparent data 95 and 96 in Fig. 9 are speech data and unrestricted digital data, each divided by transport block unit defined between layer 1 and layer 2. These transparent data divided by transports block unit equal to MACPDU (and MACSDU), and therefore each data of the transport block unit corresponds to the confidentiality processing unit.

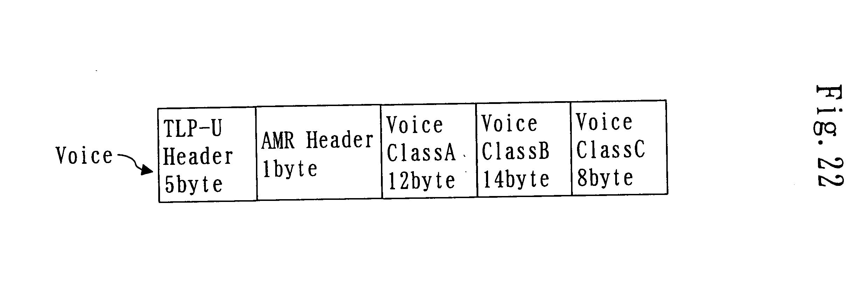

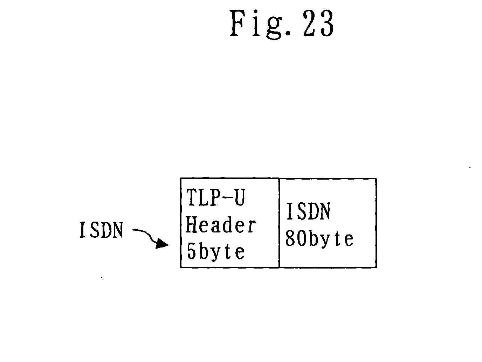

As data kinds such as speech data are user data which remains transparent in the RLC sub-layers, by implementing ARIB defined MT (Mobile Terminal) - TA (Tarminal Adaptor) I/F (Figs. 22, 23) as the serial interface for this transport model, it becomes possible to perform confidentiality processing on the MA-TA I/F serial formats without any conversion.

Further, a concrete example of the non-transparent data 97 is, as described above, packet data or data for signaling, however, each data is divided into units (Transport Block) defined between the layers 1 and 2.

The confidentiality/integrity processing unit 40 shown in Fig. 9 performs the confidentiality processing and the integrity processing selectively on the non-transparent data input/output from/to the radio communication control unit 20, and at the same time, the confidentiality/integrity processing unit 40 always performs, for example, the confidentiality processing on the transparent data input/output between the terminal IF unit 10 and the radio communication unit 30. The confidentiality/integrity processing unit 40 does not perform the integrity processing on the transparent data. If the transparent data includes data which does not require the confidentiality processing, the radio communication control unit 20 makes the transparent data which does not require the confidentiality processing not input to the confidentiality/integrity processing unit 40, but input to the radio communication control unit 20. Or it is possible to make the transparent data which does not require the confidentiality processing input to the confidentiality/integrity processing unit 40, but not perform the confidentiality processing on the transparent data using the control signal from the radio communication control unit 20.

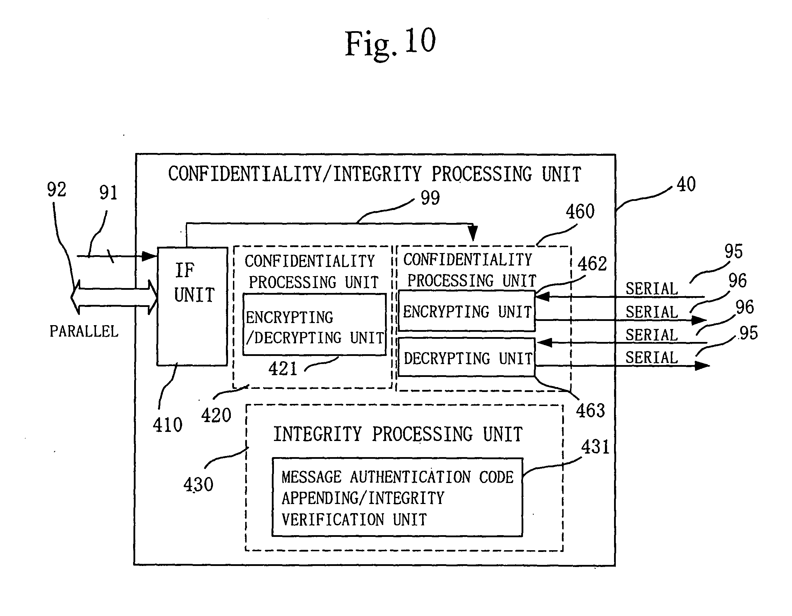

Fig. 10 shows a configuration of the confidentiality/integrity processing unit 40.

Different from the configuration shown in Fig. 5, Fig. 10 newly includes a confidentiality processing unit 460. The confidentiality processing unit 460 includes an encrypting unit 462 and a decrypting unit 463. The encrypting unit 462 inputs the transparent data 95 from the terminal IF unit 10, encrypts the input data to output to the radio communication unit 30 as the transparent data 96. On the other hand, the decrypting unit 463 inputs the transparent data 96 from the radio communication unit 30, decrypts the input data to output to the terminal IF unit 10 as the transparent data 95. These processes of the confidentiality processing unit 460 are performed based on the control signal 99 from the IF unit 410. The control signal 99 is derived from the control signal 91. Accordingly, the confidentiality processing unit 460 performs the confidentiality processing based on the control signal issued from the radio communication control unit 20. In Fig. 10, the data 92 is input/output using the parallel interface through bus. On the other hand, the transparent data 95 and 96 are input/output to/from the confidentiality processing unit 460 through the serial interface. As explained above, Fig. 10 shows a case in which two systems of input/output interface, that is, the parallel interface and the serial interface are provided in the confidentiality/integrity processing unit 40.

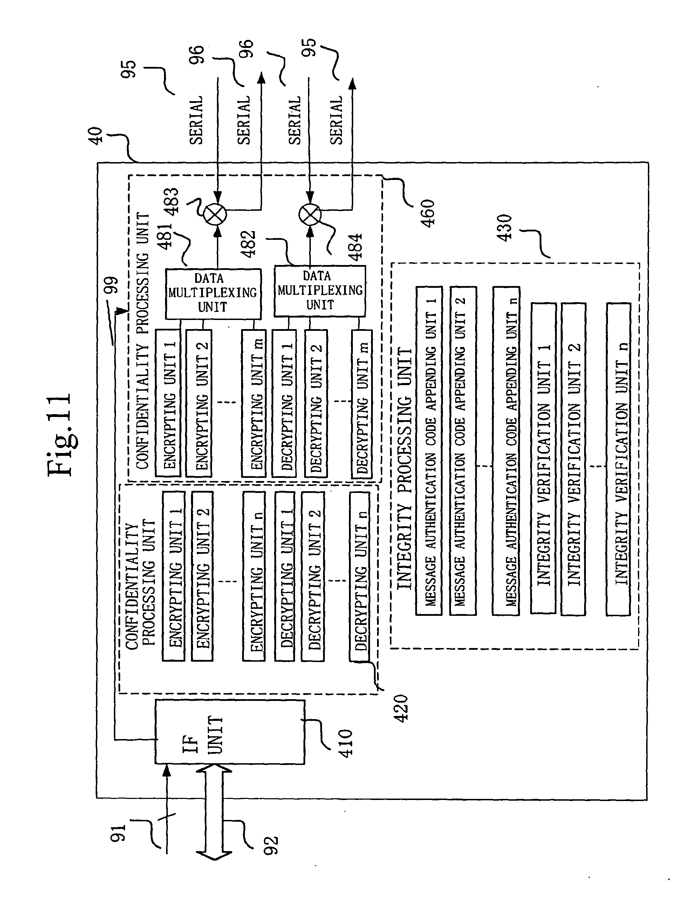

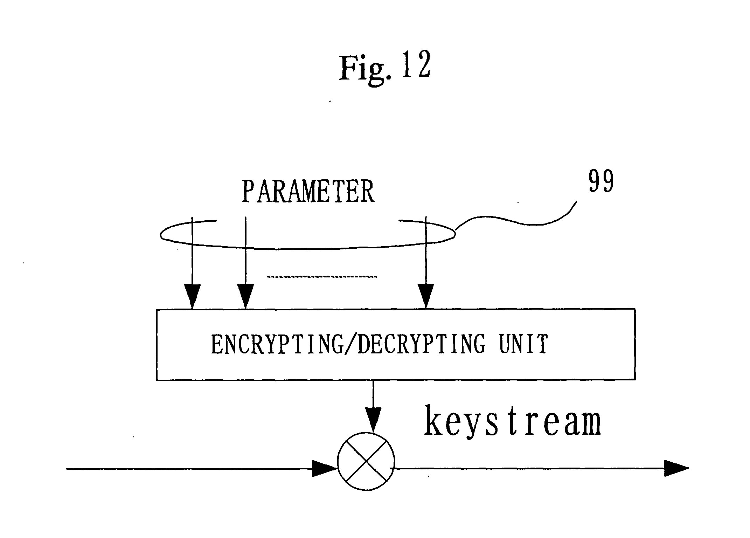

Fig. 11 shows a configuration in which the confidentiality processing unit 460 is added to the confidentiality/integrity processing unit 40 shown in Fig. 7. It is effective to have the configuration shown in Fig. 11 when the encrypting unit or the decrypting unit generates key streams to be XORed with the serial data as shown in Fig. 12.

As shown in Fig. 11, the transparent data 95 and 96 are input/output from/to the confidentiality processing unit 460 through the serial interface, and further, the serial data which is input/output through the serial interface includes multiplexed data of multiple channels. For example, when data of channel 2 is input as serial data after data of channel 1 is input, the encrypting unit 1 corresponding to the channel 1 generates a key stream to output to a multiplexer 481, the encrypting unit 2 corresponding to the channel 2 generates another key stream to output to the multiplexer 481, and the multiplexer 481 multiplexes these key streams into format the same as the data system of the data 95. The multiplexed key stream and the data sequence of the input data 95 are XORed by the XOR circuit 483. The confidentiality processing unit 460 performs the above operations based on the control signal 99, namely, the control signal 91 supplied from the radio communication control unit 20. By using the configuration of Fig. 11, the delay of the serial data is caused only by the operation of the XOR circuit 483, which enables the high speed processing.

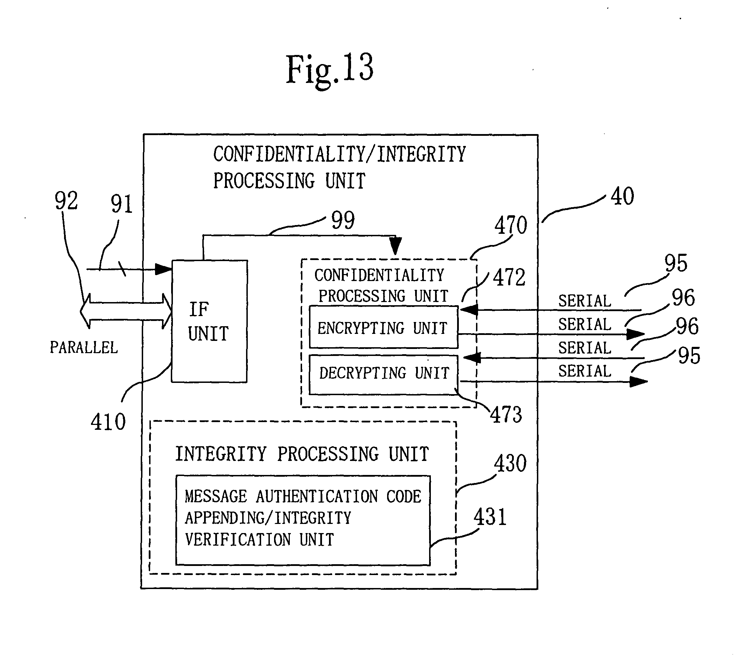

Fig. 13 shows another configuration in which the confidentiality processing unit 420 and the confidentiality processing unit 460 of Fig. 10 are combined into one confidentiality processing unit 470.

The confidentiality processing unit 470 processes both of the data 92 input/output through the parallel interface and the data 95, 96 input/output through the serial interface. The confidentiality processing unit 420 and the confidentiality processing unit 460 are united into the confidentiality processing unit 470, so that the hardware resource can be reduced. The confidentiality processing unit 470 switches the process for the transparent data and the process for the non-transparent data based on the control signal 99, namely, the control signal 99 output from the radio communication control unit 20.

The above confidentiality/integrity processing unit 40 can be configured by the hardware. For example, the configuration can be implemented by FPGA or custom LSI. Further, the confidentiality/integrity processing unit 40 can be implemented by the software program. In case the confidentiality/integrity processing unit 40 is implemented by the software program, CPU of the radio communication control unit 20 executes the software program.

Further, the confidentiality/integrity processing unit 40 can be implemented by a combination of the hardware and the software. For example, the confidentiality/integrity processing unit 40 can be implemented by DSP (Digital Signal Processor) and micro program or firmware program executed by the DSP.

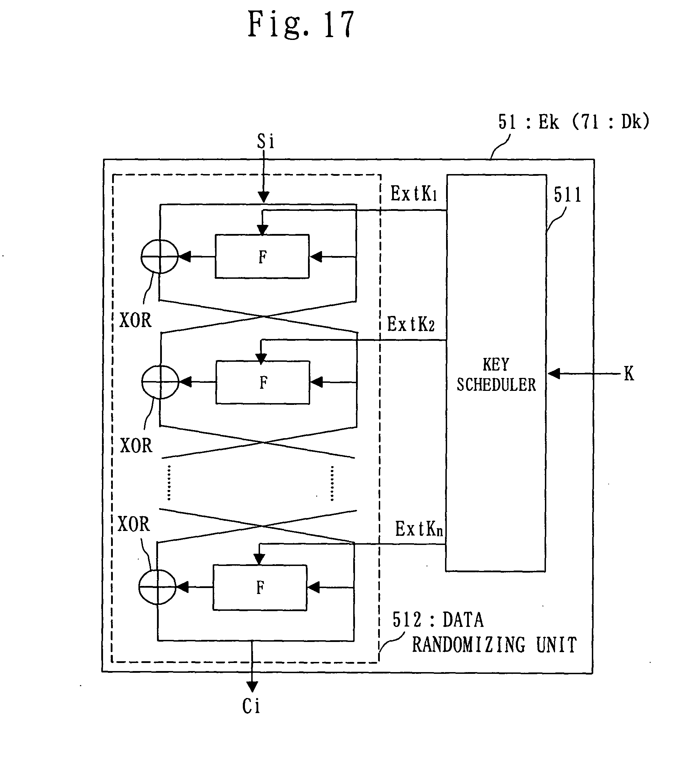

Hereinafter, a concrete example will be explained with reference to Figs. 17 through 20.

Fig. 17 shows a configuration of the encryption module 51 (or decryption module 71) used for the encryption/decrypting unit 421. The encryption module 51 includes a key scheduler 511 and a data randomizing unit 512. The key scheduler 511 inputs one key K and generates n extended keys ExtK1 through ExtKn. The data randomizing unit 512 generates a random number using a function F and an XOR circuit. The function F inputs the extended key and performs non-linear data transformation.

In the encryption module 51, various block cipher algorithm can be employed such as:
(1) DES (Data Encryption Standard);
(2) MISTY, which is the block cipher algorithm disclosed in the International Publication No. WO97/9705 (US Serial No. 08/83640);
(3) KASUMI, which is the 64-bit block cipher technique based on the above block cipher algorithm MISTY and is determined to be employed as International standard cipher for next generation cellular phone (IMT2000); and
(4) Camellia, which is the block cipher algorithm disclosed in the Japanese patent application No. 2000-64614 (filed on March 9, 2000).

Further, these block cipher algorithms such as DES, MISTY, KASUMI, and Camellia can be employed in the decryption module 71.

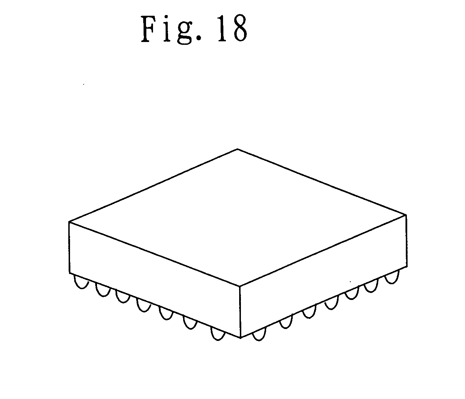

Fig. 18 shows the implementation form of the confidentiality/integrity processing unit 40.

Fig. 18 shows a case in which the confidentiality/integrity processing unit 40 is implemented inside FPGA, IC or LSI. Namely, the confidentiality/integrity processing unit 40 can be implemented by the hardware. Further, the confidentiality/integrity processing unit 40 can be also implemented by a print circuit board, which is not shown in the figure.

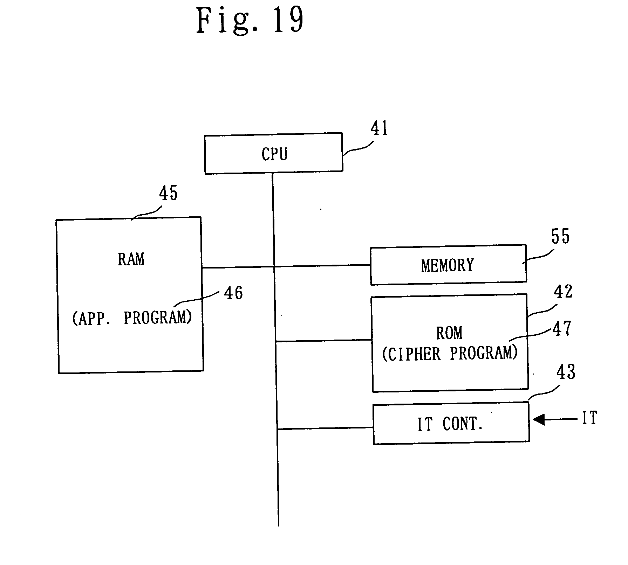

Fig. 19 shows a case in which the confidentiality/integrity processing unit 40 is implemented by the software.

The confidentiality/integrity processing unit 40 can be implemented by a cipher program 47. The cipher program 47 is stored in a ROM (Read Only Memory) 42 (an example of storage). The cipher program 47 can be stored in a RAM (Random Access Memory) or another storage such as a flexible disk or a fixed disk. Further, the cipher program 47 can be downloaded from a server computer. The cipher program 47 is functioned as a subroutine. The cipher program 47 is called for subroutine execution from an application program 46 stored in the RAM 45 as a subroutine call. In another way, the cipher program 47 can be activated by generation of an interrupt received at an interrupt control unit 43. A memory 55 can be a part of the RAM 45. The application program 46 and the cipher program 47 are programs executed by the CPU 41.

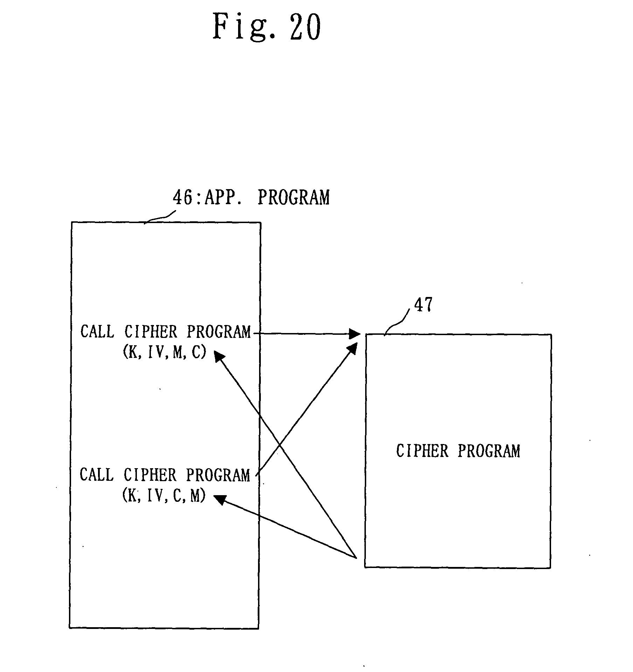

Fig. 20 shows mechanism for calling the cipher program 47 by the application program 46 which is operated on the radio communication control unit 20.

The application program 46 calls the cipher program 47 using parameters of a key K, an initial value IV, plaintext data M, and ciphertext data C. The cipher program 47 inputs the key K, the initial value IV, and the plaintext data M and returns the ciphertext data C. If the cipher program 47 and the decryption program are the same, the cipher program 47 is called using parameters of the key K, the initial value IV, the ciphertext data C, and the plaintext data M.

Further, the cipher program 47 can be implemented by a digital signal processor and a program read and executed by the digital signal processor, though which is not shown in the figure. Namely, the cipher program 47 can be implemented by combination of the hardware and the software.

The above explanation referring to Figs. 18, 19, and 20 applies to the encryption, however, the decryption can be implemented in the same way.

The encryption system or the decryption system can be installed to an electronic devices. The system can be installed in all kinds of electronic devices, for example, a personal computer, facsimile machine, a cellular phone, a video camera, a digital camera, or a TV camera. In particular, the feature of the embodiment can be accomplished effectively when the data from multiple channels is encrypted/decrypted. Or the implementation of the embodiment can be effective in case where data is received at random from multiple users and decrypted, or data for multiple users is generated at random and respectively encrypted in real time. Namely, the encryption/decryption of the above embodiment can be extremely effective when the number of apparatuses for encryption/decryption is small compared with the number of data kinds to be encrypted/decrypted. For example, the encryption/decryption of the above embodiment is highly effective when applied to a server computer which has to support many client computers or a base station or a line control unit which has to collect and distribute data from/to many cellular phones.

In the above example, the radio communication control unit 20 and the confidentiality/integrity processing unit 40 are connected with the parallel interface through the bus, however, the serial interface can be used for connecting the radio communication control unit 20 and the confidentiality/integrity processing unit 40. Further, in the above explanation, the terminal IF unit 10 and the confidentiality/integrity processing unit 40, the 30 and the confidentiality/integrity processing unit 40 are connected with the serial interface, however, the parallel interface can be used for processing at a higher speed instead of the serial interface.

In case of Figs. 9 and 10, the confidentiality processing unit 460 is provided inside the confidentiality/integrity processing unit 40, however, the confidentiality processing unit 460 can be provided independently from the confidentiality/integrity processing unit 40, and the confidentiality processing unit 460 can be placed between the terminal IF unit 10 and the radio communication unit 30.

### Industrial Applicability

As mentioned above, this implementation embodiment enables confidentiality/integrity processing in layer 2 or upper layers so that confidentiality processing is not performed in layer 1, therefore making it possible to determine the necessity of confidentiality/integrity processing based on data kinds.

For example, only confidentiality processing is performed on the transparent data, and both the confidentiality processing and the integrity processing are performed on the non-transparent data. In another way, it becomes possible to select to perform or not the confidentiality processing and the integrity processing in case of processing the non-transparent data.

Further, according to the above embodiment, multiple confidentiality processing units and multiple integrity processing units are provided inside the confidentiality/integrity processing unit according to the number of channels or the amount of the data, enabling high speed data processing by the simultaneous parallel processing.

## Claims

1. A radio communication apparatus comprising:
a terminal interface unit for inputting/outputting data;
a radio communication control unit for processing data which is at layer 2 or a higher layer of the data input/output by the terminal interface unit based on protocol and discriminating data kind of the data at layer 2 or a higher layer;
a confidentiality/integrity processing unit for selectively performing a confidentiality processing to encrypt the data and an integrity processing to generate a message authentication code for detecting tampered data, based on a control signal output from the radio communication control unit; and
a radio communication unit for modulating and sending the data input/output by the radio communication control unit or the confidentiality/integrity processing unit.

2. The radio communication apparatus of claim 1, wherein the radio communication control unit discriminates the data input between non-transparent data including packet data and transparent data including speech data, and outputs discrimination result as a controls signal.

3. The radio communication apparatus of claim 2, wherein the confidentiality/integrity processing unit selectively performs the confidentiality processing and the integrity processing on the non-transparent data, and does not perform the integrity processing but performs the confidentiality processing on the transparent data selectively based on the control signal.
